# EUROPÄISCHE PATENTANMELDUNG

(11) **EP 2 862 790 A1**
(43) Veröffentlichungstag der Anmeldung: **22.04.2015**
(21) Anmeldenummer: 13188742.4
(22) Anmeldetag: 15.10.2013
(51) Int. Cl.: B62M 6/55

(54) **Montagefertige Antriebsvorrichtung**

(71) Anmelder: Conti Temic Microelectronic GmbH, 90411 Nürnberg (DE)
(72) Erfinder: Schlotter, Michael, 90562 Heroldsberg (DE); Eglinger, Markus, 91456 Diespeck (DE); Salhi, Youssef, 90443 Nürnberg (DE); Breitenbach, Stephan, 90429 Nürnberg (DE); Welsing, David, 90411 Nürnberg (DE)
(74) Vertreter: Bonn, Roman Klemens

(57) **Zusammenfassung**

Es wird eine montagefertige Antriebsvorrichtung angegeben, mit
- einem Gehäuse (1),
- einer mechanischen Antriebseinheit (2) zur Erzeugung eines ersten Drehmoments (M1), wobei die mechanische Antriebseinheit (2) durch Muskelkraft betrieben wird,
- einer elektrischen Antriebseinheit (3) zur Erzeugung eines zweiten Drehmoments (M2), und
- einem schaltbaren Getriebe (4), wobei
- die mechanische Antriebseinheit (2), die elektrische Antriebseinheit (3) und das schaltbare Getriebe (4) in dem Gehäuse (1) angeordnet sind,
- das erste Drehmoment (M1) der mechanischen Antriebseinheit (2) und das zweite Drehmoment (M2) der elektrischen Antriebseinheit (3) derart miteinander verbunden sind, dass das erste Drehmoment (M1) und das zweite Drehmoment (M2) in Verbindung mit dem schaltbaren Getriebe (4) ein drittes Drehmoment (M3) erzeugen und
- das dritte Drehmoment (M3) auf eine Antriebswelle (5) wirkt.

## Beschreibung

Es wird eine montagefertige Antriebsvorrichtung angegeben.

Eine zu lösende Aufgabe besteht darin, insbesondere eine montagefertige Antriebsvorrichtung anzugeben, die kompakt im Aufbau ist.

Gemäß zumindest einer Ausführungsform der montagefertigen Antriebsvorrichtung umfasst diese ein Gehäuse. Das Gehäuse kann beispielsweise einen Kunststoff oder ein Metall umfassen. Das Gehäuse umfasst insbesondere einen Hohlraum. In dem Hohlraum des Gehäuses können Komponenten der montagefertigen Antriebsvorrichtung angeordnet, montiert und/oder justiert sein. Das Wort "Komponenten" umfasst im vorliegenden Zusammenhang insbesondere Antriebseinheiten, Getriebe und/oder Wellen. Beispielsweise kann das Gehäuse dazu geeignet sein, die Komponenten vor äußeren Einflüssen, beispielsweise Umwelteinflüssen, zu schützen. Insbesondere ist das Gehäuse dazu geeignet, die Komponenten vor äußerer, mechanischer Beschädigung zu schützen.

Gemäß zumindest einer Ausführungsform der montagefertigen Antriebsvorrichtung umfasst diese eine mechanische Antriebseinheit zur Erzeugung eines ersten Drehmoments, wobei die mechanische Antriebseinheit durch Muskelkraft betrieben wird. Die mechanische Antriebseinheit kann beispielsweise mit einem Tretlager verbunden sein oder ein Tretlager umfassen. Das erste Drehmoment kann somit durch eine menschlich erzeugte Rotationsbewegung, zum Beispiel durch eine von einem Fahrradfahrer erzeugte Rotationsbewegung, erzeugt werden. Der Rotationsbewegung ist eine Trittfrequenz zugeordnet.

Das erste Drehmoment kann beispielsweise durch einen Drehmomentsensor gemessen werden. Durch den Drehmomentsensor kann beispielsweise eine weitere Antriebseinheit hinsichtlich eines hinzuschaltbaren weiteren Drehmoments geregelt sein.

Gemäß zumindest einer Ausführungsform der montagefertigen Antriebsvorrichtung umfasst diese eine elektrische Antriebseinheit zur Erzeugung eines zweiten Drehmoments. Die elektrische Antriebseinheit kann beispielsweise in Form eines Elektromotors vorliegen. Die elektrische Antriebseinheit kann beispielswiese von einer tragbaren Batterie bestromt werden. Eine Steuerung der elektrischen Antriebseinheit kann beispielsweise in Abhängigkeit vom dem gemessenen Drehmoment und/oder anderer Größen über eine Steuerungseinheit erfolgen.

Gemäß zumindest einer Ausführungsform der montagefertigen Antriebsvorrichtung umfasst diese ein schaltbares Getriebe. Das schaltbare Getriebe kann insbesondere zur Hochsetzung beziehungsweise Runtersetzung eines auf es wirkenden Drehmoments geeignet sein. Das heißt, dass durch das schaltbare Getriebe eine zur Erzeugung eines Drehmoments erforderlich Drehzahl durch eine entsprechende Schaltstufe des schaltbaren Getriebes erniedrigt oder erhöht werden kann.

Gemäß zumindest einer Ausführungsform der montagefertigen Antriebsvorrichtung sind die mechanische Antriebseinheit, die elektrische Antriebseinheit und das schaltbare Getriebe in dem Gehäuse angeordnet. Insbesondere sind die mechanische Antriebseinheit, die elektrische Antriebseinheit und das schaltbare Getriebe durch das Gehäuse umgeben und geschützt. Ferner kann das Gehäuse Kontaktstellen aufweisen, die zur Anordnung von weiteren Komponenten der mechanischen Antriebseinheit oder der elektrischen Antriebseinheit vorgesehen sein können. Beispielsweise kann eine dieser Kontaktstellen zur Verbindung der tragbaren Batterie mit der elektrischen Antriebseinheit vorgesehen sein. Auch kann eine der Kontaktstellen zur Anordnung einer Welle vorgesehen sein. Mittels dieser Welle kann ein in der montagefertigen Antriebsvorrichtung erzeugtes Drehmoment beispielsweise mittelbar - beispielsweise durch ein Ketten-Riemen- oder Kardangetriebe - oder unmittelbar auf ein Hinterrad übertragen werden.

Gemäß zumindest einer Ausführungsform der montagefertigen Antriebseinheit sind das erste Drehmoment der mechanischen Antriebseinheit und das zweite Drehmoment der elektrischen Antriebseinheit derart miteinander verbunden, dass das erste Drehmoment und das zweite Drehmoment in Verbindung mit dem schaltbaren Getriebe ein drittes Drehmoment erzeugen. Das zweite Drehmoment der elektrischen Antriebseinheit kann beispielsweise in Abhängigkeit von einem durch den Drehmomentsensor bestimmten Wert des ersten Drehmoments - beispielsweise durch die mit dem Drehmomentsensor verbundene Steuerungseinheit der Antriebseinheit- gesteuert werden. Durch das schaltbare Getriebe kann somit eine zur Erreichung der Zielgeschwindigkeit erforderliche Drehzahl erreicht beziehungsweise geregelt werden, die dann in dem dritten Drehmoment resultiert. Mittels des dritten Drehmoments kann beispielsweise das hier beschriebene Hinterrad betrieben werden.

Gemäß zumindest einer Ausführungsform der montagefertigen Antriebsvorrichtung wirkt das dritte Drehmoment auf eine Antriebswelle. Die hier beschriebene Welle kann beispielsweise die Antriebswelle umfassen. Die Antriebswelle wird durch das dritte Drehmoment angetrieben. Das heißt, ein Drehmoment der Antriebswelle kann gleich dem dritten Drehmoment sein. Die Antriebswelle kann beispielsweise zwischen der montagefertigen Antriebsvorrichtung und dem Hinterrad angeordnet sein. Mit anderen Worten kann die Antriebswelle Bestandteil eines Antriebsstrangs sein. Die Antriebswelle kann mittels des festen Ketten-Riemen- oder Kardangetriebes mit dem Hinterrad verbunden sein.

Gemäß zumindest einer Ausführungsform der montagefertigen Antriebsvorrichtung umfasst diese ein Gehäuse, eine mechanische Antriebseinheit zur Erzeugung eines ersten Drehmoments, wobei die mechanische Antriebseinheit durch Muskelkraft betrieben wird. Ferner umfasst die montagefertige Antriebsvorrichtung eine elektrische Antriebseinheit zur Erzeugung eines zweiten Drehmoments und ein schaltbares Getriebe. Des Weiteren sind in der montagefertigen Antriebsvorrichtung die mechanische Antriebseinheit, die elektrische Antriebseinheit und das schaltbare Getriebe in dem Gehäuse angeordnet. Hierbei ist das erste Drehmoment der mechanischen Antriebseinheit und das zweite Drehmoment der elektrischen Antriebseinheit derart miteinander verbunden, dass das erste Drehmoment und das zweite Drehmoment in Verbindung mit dem schaltbaren Getriebe ein drittes Drehmoment erzeugen und das dritte Drehmoment auf eine Antriebswelle wirkt.

Die hier beschriebene montagefertige Antriebsvorrichtung beruht dabei unter anderem auf der Erkenntnis, dass durch eine Integration von Antriebseinheiten und schaltbaren Getriebe in ein gemeinsames Gehäuse insbesondere Materialkosten und Gewicht eingespart werden können, da durch ein einziges Gehäuse jeweils die Antriebseinheiten und das schaltbare Getriebe geschützt werden. Somit sind einzelne Gehäuse zum Schutz der Antriebseinheit und des Getriebes nicht mehr erforderlich. Durch die Montage der hier beschriebenen montagefertigen Antriebsvorrichtung im Tretlagerbereich eines Fahrrades wird der Schwerpunkt nach vorne verlagert, wodurch sich ein angenehmeres Fahrgefühl einstellt.

Aufgrund der Integration der Antriebseinheiten und des schaltbaren Getriebes in das gemeinsame Gehäuse ist zudem ein geringerer mechanischer Verschleiß beziehungsweise eine geringere Alterung gegeben, da durch das Gehäuse insbesondere die Antriebseinheiten sowie das schaltbare Getriebe vor äußeren Einflüssen, beispielsweise Schmutz und Feuchtigkeit, geschützt werden können. Des Weiteren wird durch die Verlagerung des schaltbaren Getriebes von einem Hinterrad in die Mitte eines Fahrrads die Dynamik einer Hinterradfederung verbessert, da eine zusätzliche Masse des schaltbaren Getriebes nicht mehr zur ungefederten Masse gehört, sondern zur gefederten Masse des Fahrrades.

Gemäß zumindest einer Ausführungsform der montagefertigen Antriebsvorrichtung sind die mechanische Antriebsvorrichtung und die elektrische Antriebsvorrichtung jeweils mit einer Eingangswelle verbunden und die Eingangswelle ist mit dem schaltbaren Getriebe verbunden. Hierbei können beispielsweise optional zwischen der mechanischen Antriebswelle und der Eingangswelle sowie zwischen der elektrischen Antriebseinheit und der Eingangswelle weitere Getriebe angeordnet sein. Durch die Eingangswelle können das erste Drehmoment und das zweite Drehmoment miteinander kombiniert und in das schaltbare Getriebe übertragen werden. Das heißt, die durch die mechanische Antriebseinheit und die elektrische Antriebseinheit erzeugten Drehmomente werden auf die Eingangswelle übertragen. Das auf die Antriebswelle übertragene Drehmoment - also das dritte Drehmoment - wird dann durch eine Übersetzung des schaltbaren Getriebes bestimmt.

Gemäß zumindest einer Ausführungsform der montagefertigen Antriebsvorrichtung ist die mechanische Antriebseinheit direkt mit dem schaltbaren Getriebe verbunden. Das heißt, dass eine Kombination aus dem ersten und zweiten Drehmoment direkt durch die mechanische Antriebseinheit auf das schaltbare Getriebe übertragen wird. Das auf die Antriebswelle übertragene Drehmoment - also das dritte Drehmoment - wird dann durch die Übersetzung des schaltbaren Getriebes bestimmt.

Gemäß zumindest einer Ausführungsform der montagefertigen Antriebsvorrichtung umfasst das schaltbare Getriebe eine kontinuierlich variable Übersetzung. Beispielsweise kann die kontinuierlich variable Übersetzung in Form einer CVT-Schaltung (CVT: "Continuously Variable Transmission") vorliegen. Hierdurch kann die Übersetzung desschaltbaren Getriebes stufenlos geregelt werden. Insbesondere kann dadurch eine gleichmäßige Erhöhung beziehungsweise Reduzierung der Trittfrequenz beziehungsweise der Drehzahl hinsichtlich der durch den Fahrradfahrer erzeugten Rotationsbewegung bei einer ansonsten konstanten Fahrtgeschwindigkeit erfolgen.

Gemäß zumindest einer Ausführungsform der montagefertigen Antriebsvorrichtung umfasst das schaltbare Getriebe eine diskrete Übersetzung. Unter "diskret" werden im vorliegenden Zusammenhang einstellbare Gangstufen oder eine stufenweise Übersetzungsänderung des schaltbaren Getriebes verstanden. Beispielsweise kann eine Übersetzungsänderung des schaltbaren Getriebes manuell mittels eines Bowdenzuges oder eines Schaltaktuators durchgeführt werden.

Gemäß zumindest einer Ausführungsform der montagefertigen Antriebsvorrichtung ist die Antriebswelle mit einem Hinterrad verbunden. Eine Verbindung zwischen der Antriebswelle der montagefertigen Antriebsvorrichtung und dem Hinterrad kann insbesondere über eine Kette, Zahnriemen oder Kardangetriebe erfolgen. Die Antriebswelle kann insbesondere ein Zahnrad oder eine Riemenscheibe umfassen.

Ferner wird ein Fahrrad angegeben, welches eine hier beschriebene montagefertige Antriebsvorrichtung umfasst. Die montagefertige Antriebsvorrichtung des Fahrrads kann insbesondere im Bereich des Tretlagers angeordnet sein. Dies führt insbesondere zu einem besonders angenehmen Fahrgefühl, da sich der Schwerpunkt des Fahrrads nahe der Mitte des Fahrrades befindet. Das Hinterrad des Fahrrades kann beispielsweise mittels der Kette mit der montagefertigen Antriebsvorrichtung verbunden sein.

Im Folgenden wird die hier beschriebene montagefertige Antriebsvorrichtung anhand von Ausführungsbeispielen und dazugehörigen Figuren 1, 2 und 3 näher erläutert.
- Die Figur 1: zeigt eine schematische Darstellung einer hier beschriebenen montagefertigen Antriebsvorrichtung.
- Die Figur 2: zeigt eine schematische Darstellung einer weiteren Ausführungsform der hier beschriebenen montagefertigen Antriebsvorrichtung.
- Die Figur 3: zeigt ein Fahrrad, welches die hier beschriebene montagefertige Antriebsvorrichtung umfasst.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

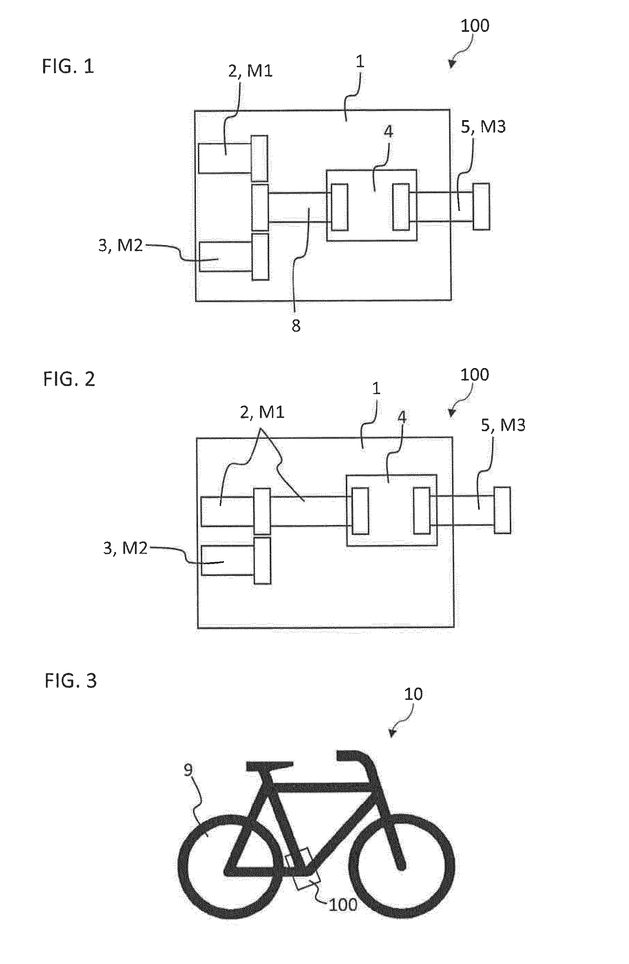

Die schematische Darstellung der Figur 1 zeigt ein erstes Ausführungsbeispiel einer hier beschriebenen montagefertigen Antriebsvorrichtung 100. Die montagefertige Antriebsvorrichtung 100 umfasst ein Gehäuse 1, eine mechanische Antriebseinheit 2 zur Erzeugung eines ersten Drehmoments M1, eine elektrische Antriebseinheit 3 zur Erzeugung eines zweiten Drehmoments M2 und ein schaltbares Getriebe 4.

Wie aus der Figur 1 ersichtlich ist, sind die mechanische Antriebseinheit 2, die elektrische Antriebseinheit 3 und das schaltbare Getriebe 4 sowie eine Eingangswelle 8 innerhalb des Gehäuses 1 angeordnet. In der Figur 1 ist die mechanische Antriebseinheit 2 und die elektrische Antriebseinheit 3 jeweils mit der Eingangswelle 8 verbunden. Die Eingangswelle 8 ist wiederum mit dem schaltbaren Getriebe 4 verbunden. Die mit dem schaltbaren Getriebe 4 verbundene Antriebswelle 5 ist teilweise außerhalb des Gehäuses 1 angeordnet, so dass eine Verbindung mittels einer Kette oder eines Kardangetriebes mit einem Hinterrad eines Fahrrades möglich ist. Ein auf die Antriebswelle 5 übertragenes Drehmoment M3 wird dann durch eine eingestellte Übersetzung des schaltbaren Getriebes 4 bestimmt.

In der schematischen Darstellung der Figur 2 ist eine montagefertige Antriebsvorrichtung wie in der Figur 1 gezeigt, mit dem Unterschied, dass die mechanische Antriebseinheit 2 mit dem schaltbaren Getriebe 4 direkt verbunden ist. Die elektrische Antriebseinheit 3 ist mit der mechanischen Antriebseinheit 2 direkt oder optional über ein weiteres Getriebe verbunden. Das auf die Antriebswelle 5 übertragene Drehmoment M3 wird dann durch die Übersetzung des schaltbaren Getriebes 4 bestimmt.

In der Figur 3 ist schematisch ein Fahrrad 10 gezeigt, wobei die in der Figur 1 oder 2 gezeigte montagefertige Antriebsvorrichtung 100 an dem Fahrrad 10 montiert ist. Die montagefertige Antriebsvorrichtung 100 des Fahrrades 10 betreibt dabei das Hinterrad 9. Eine Zielgeschwindigkeit des Fahrrades 10 wird dabei durch die Übertragung des hier beschriebenen Drehmoments M3 der Antriebswelle 5 an das Hinterrad 9 erreicht.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Montagefertige Antriebsvorrichtung (100) mit
- einem Gehäuse (1),
- einer mechanischen Antriebseinheit (2) zur Erzeugung eines ersten Drehmoments (M1), wobei die mechanische Antriebseinheit (2) durch Muskelkraft betrieben wird,
- einer elektrischen Antriebseinheit (3) zur Erzeugung eines zweiten Drehmoments (M2), und
- einem schaltbaren Getriebe (4), wobei
- die mechanische Antriebseinheit (2), die elektrische Antriebseinheit (3) und das schaltbare Getriebe (4) in dem Gehäuse (1) angeordnet sind,
- das erste Drehmoment (M1) der mechanischen Antriebseinheit (2) und das zweite Drehmoment (M2) der elektrischen Antriebseinheit (3) derart miteinander verbunden sind, dass das erste Drehmoment (M1) und das zweite Drehmoment (M2) in Verbindung mit dem schaltbaren Getriebe (4) ein drittes Drehmoment (M3) erzeugen und
- das dritte Drehmoment (M3) auf eine Antriebswelle (5) wirkt.

2. Montagefertige Antriebsvorrichtung (100) gemäß Anspruch 1,
wobei die mechanische Antriebseinheit (2) und die elektrische Antriebseinheit (3) jeweils mit einer Eingangswelle (8) verbunden sind und die Eingangswelle (8) mit dem schaltbaren Getriebe (4) verbunden ist.

3. Montagefertige Antriebsvorrichtung (100) gemäß Anspruch 1,
wobei die mechanische Antriebseinheit (2) direkt mit dem schaltbaren Getriebe (4) verbunden ist.

4. Montagefertige Antriebsvorrichtung (100) gemäß einem der vorherigen Ansprüche,
wobei das schaltbare Getriebe (4) eine kontinuierlich variable Übersetzung umfasst.

5. Montagefertige Antriebsvorrichtung (100) gemäß einem der vorherigen Ansprüche,
wobei das schaltbare Getriebe (4) eine diskrete Übersetzung umfasst.

6. Montagefertige Antriebsvorrichtung (100) gemäß einem der vorherigen Ansprüche,
wobei die Antriebswelle (5) mit einem Hinterrad (9) verbunden ist.

7. Fahrrad (10) umfassend eine montagefertige Antriebsvorrichtung (100) gemäß einem der Ansprüche 1 bis 6.
